# FASCICULE DE BREVET EUROPEEN

(11) **EP 2 800 666 B1**
(45) Date de publication et mention de la délivrance du brevet: **10.02.2016**
(21) Numéro de dépôt: 12806548.9
(22) Date de dépôt: 22.11.2012
(51) Int. Cl.: B60H 1/00, B60H 1/24

(54) **GRILLE DEFLECTRICE POUR UN SYSTEME D'AERATION D'UN VEHICULE AUTOMOBILE.**
DEFLEKTORGITTER FÜR DAS LÜFTUNGSSYSTEM EINES KRAFTFAHRZEUGS
DEFLECTOR GRATING FOR A MOTOR VEHICLE VENTILATION SYSTEM

(30) Priorité: 05.01.2012 FR 1250107
(43) Date de publication de la demande: 12.11.2014
(73) Titulaire: Peugeot Citroën Automobiles SA, 78140 Vélizy Villacoublay (FR)
(72) Inventeur: SENECAL, Josselin, F-77176 Savigny Le Temple (FR)
(74) Mandataire: Fosse, Danièle
(86) Numéro de dépôt international: PCT/FR2012/052697
(87) Numéro de publication internationale: WO 2013/102710

(56) Documents cités:
- FR-A1- 2 929 173
- GB-A- 2 347 890
- US-A1- 2005 075 064
- US-A1- 2007 184 772
- US-A1- 2008 076 344

## Description

L'invention a trait à l'aération des véhicules automobiles.

Tout véhicule automobile est généralement équipé d'un système d'aération pour permettre une égalisation des pressions entre l'extérieur et l'intérieur du véhicule, notamment pour éviter toute dépressurisation lors du roulage, en raison par exemple de l'ouverture d'une fenêtre, ou pour éviter toute surpression due à l'introduction forcée d'air via la ventilation mécanique ou à la fermeture des ouvrants (portes, coffre).

Il est connu d'équiper le véhicule d'un système d'aération monté à l'arrière, dans une paroi de la malle de coffre, cf. par exemple des brevets FR 2 637 849 (ou son équivalent européen EP 0 365 395) et FR 2 920 346.

Ces systèmes comprennent des agencements visant à permettre l'aération du véhicule tout en minimisant la remontée vers l'habitacle de bruits de roulement. C'est pourquoi ces systèmes sont équipés de déflecteurs, qui dirigent le flux d'air, et de moyens d'insonorisation, qui absorbent au moins en partie les sons provenant de l'extérieur du véhicule par des ouvertures d'évacuation du flux d'air.

Les systèmes d'aération connus ont fait leurs preuves mais méritent d'être perfectionnés pour ce qui concerne la facilité de fabrication et d'installation.

Un premier objectif est de simplifier la fabrication des systèmes d'aération.

Un deuxième objectif est de simplifier le montage des systèmes d'aération.

Un troisième objectif est d'optimiser l'aération du véhicule.

Un quatrième objectif est d'optimiser l'insonorisation du véhicule.

A cet effet, il est proposé, en premier lieu, une grille pour un système d'aération de véhicule automobile, cette grille comprenant un cadre et une série de lamelles qui s'étendent en travers du cadre, un déflecteur intégré, qui s'étend en porte-à-faux à partir d'un bord du cadre, et un tampon acoustique fixé sur une face du déflecteur tournée à l'opposé du cadre.

Il est proposé, en deuxième lieu, un système d'aération pour un véhicule automobile, qui comprend un caisson formant un conduit d'aération, muni d'une paroi frontale dans laquelle est percée une ouverture, et une grille telle que présentée ci-dessus, montée dans l'ouverture.

Il est proposé, en troisième lieu, un véhicule automobile équipé d'un tel système d'aération.

La réalisation monobloc de la grille intégrant le déflecteur minimise le nombre de composants du système d'aération, au bénéfice de sa simplicité de fabrication et de montage puisqu'il suffit de monter la grille dans une paroi d'un conduit d'aération.

Diverses caractéristiques supplémentaires peuvent être prévues, seules ou en combinaison :
- le déflecteur se présente sous forme d'une languette sensiblement plate ;
- le déflecteur présente au voisinage d'un raccord avec le cadre un repli formant une réserve d'emboîtement pour un bord d'une ouverture formée dans une paroi de montage de la grille ;
- la grille comprend, à l'opposé du déflecteur, au moins un organe élastique de retenue de la grille dans l'ouverture ;
- le déflecteur forme, avec une face d'appui du cadre, un angle inférieur à 90°, et notamment compris entre 60° et 80° ;
- le tampon acoustique est réalisé dans un matériau poreux tel qu'une mousse ;
- le cadre comprend une lèvre périphérique et une bouche sensiblement conique qui s'étend à partir de la lèvre, dans lequel s'étendent les lamelles.

D'autres objets et avantages de l'invention apparaîtront à la lumière de la description d'un mode préféré de réalisation, faite ci-après en référence aux dessins annexés dans lesquels :
- la figure 1 est une vue en perspective frontale montrant un système d'aération équipant un véhicule automobile ;
- la figure 2 est une vue en perspective arrière, en arraché partiel, montrant l'intérieur du système d'aération de la figure 1 ;
- la figure 3 est une vue en perspective de la grille d'aération équipant le système d'aération des figures précédentes ;
- la figure 4 est une vue en coupe du système d'aération des figures 1, 2 et 3, détaillant la grille en encart.

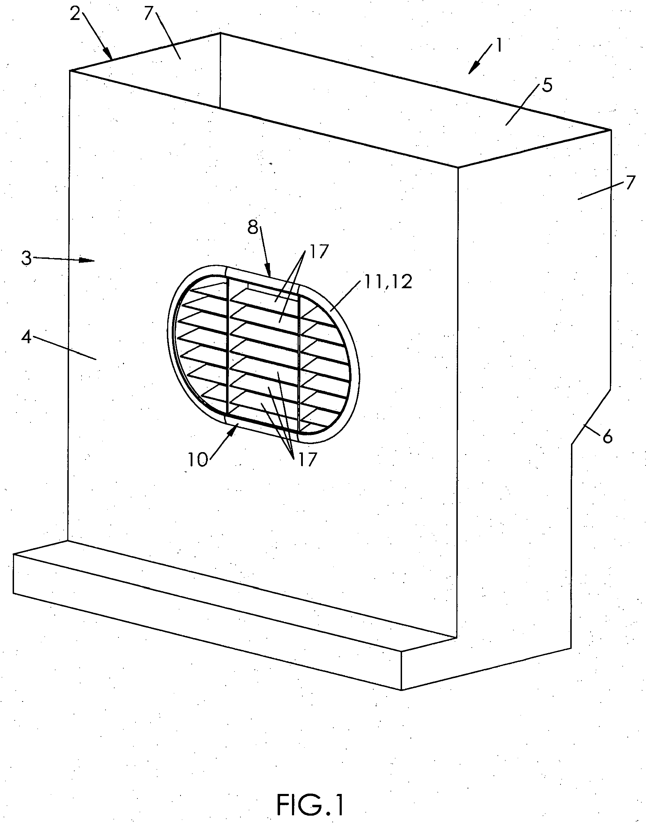

Sur la figure 1 est représenté un système **1** d'aération pour un véhicule automobile, qui comprend un caisson **2** formant un conduit d'aération monté dans (ou formant) une doublure d'aile du véhicule, par exemple dans une malle de coffre de celui-ci.

Le conduit **2** est muni d'une paroi **3** frontale présentant une face **4** externe qui délimite latéralement le volume interne de la malle de coffre, d'une paroi **5** de fond opposée, qui dans l'exemple représenté comporte un décrochement **6** formant un rétrécissement de la section du conduit vers le bas, et deux parois **7** latérales.

Le conduit d'aération est muni d'une ouverture **8** amont percée dans la paroi **3** frontale pour l'extraction d'air du véhicule, et d'une ouverture **9** aval percée dans une paroi **7** latérale pour l'évacuation de l'air extrait du véhicule par l'ouverture **8** amont. La circulation d'air est assurée par une différence de pression entre l'intérieur du véhicule, dans le sens amont-aval lorsque la pression régnant dans le véhicule est supérieure à la pression atmosphérique, ce qui correspond au cas général, et dans le sens aval-amont lorsque la pression régnant dans le véhicule est, à l'inverse, inférieure à la pression atmosphérique.

Le système **1** d'aération comprend en outre une grille **10** d'aération montée dans l'ouverture **8** amont. Cette grille **10**, réalisée dans une matière plastique, comprend un cadre **11** dont le contour général est complémentaire de celui de l'ouverture **8** (ovale en l'espèce).

Le cadre **11** comprend une lèvre **12** dont le périmètre externe est plus grand que celui de l'ouverture **8**. La lèvre **12** présente une face **13** arrière d'appui sensiblement plane qui, lorsque la grille **10** est montée dans l'ouverture **8**, est appliquée contre la face **4** externe de la paroi **3** frontale, sur le pourtour de l'ouverture **8**.

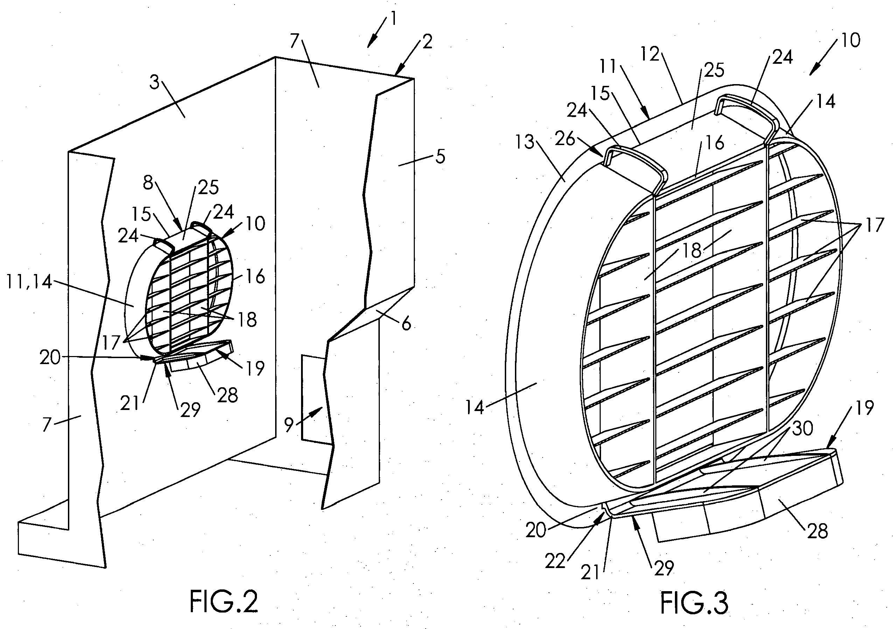

Le cadre **11** comprend également une bouche **14** sensiblement conique qui s'étend en saillie vers l'intérieur du conduit **2** à partir de la lèvre **12** lorsque la grille **10** est montée dans l'ouverture **8**. La conicité de la bouche **14** est telle qu'un bord **15** amont de la bouche **14**, par lequel celle-ci se raccorde à la lèvre **12**, présente un périmètre plus grand que celui d'un bord **16** aval libre de la bouche **14**, tourné vers l'intérieur du conduit **2** (ainsi qu'il apparaît sur les figures 2 à 4).

La grille **10** comprend une série de lamelles **17** déflectrices agencées en persiennes en travers du cadre **11** (et plus précisément en travers de la bouche **14**). Une ou plusieurs cloisons **18** intermédiaires peuvent être prévues pour rigidifier les lamelles **17**.

Comme illustré sur les figures 2 à 4, la grille **10** comprend en outre un déflecteur **19** intégré, sous forme d'une languette sensiblement plate qui s'étend en porte-à-faux à partir d'un bord **20** inférieur du cadre **11**, à une jonction entre la face **13** arrière de la lèvre et la bouche **14**.

Ce déflecteur **19** est incliné et forme avec la face **13** arrière un angle **A** inférieur à 90°. Selon un mode particulier de réalisation, cet angle **A** est compris entre 60° et 80°. Le déflecteur **19** est de préférence sensiblement parallèle aux lamelles **17**.

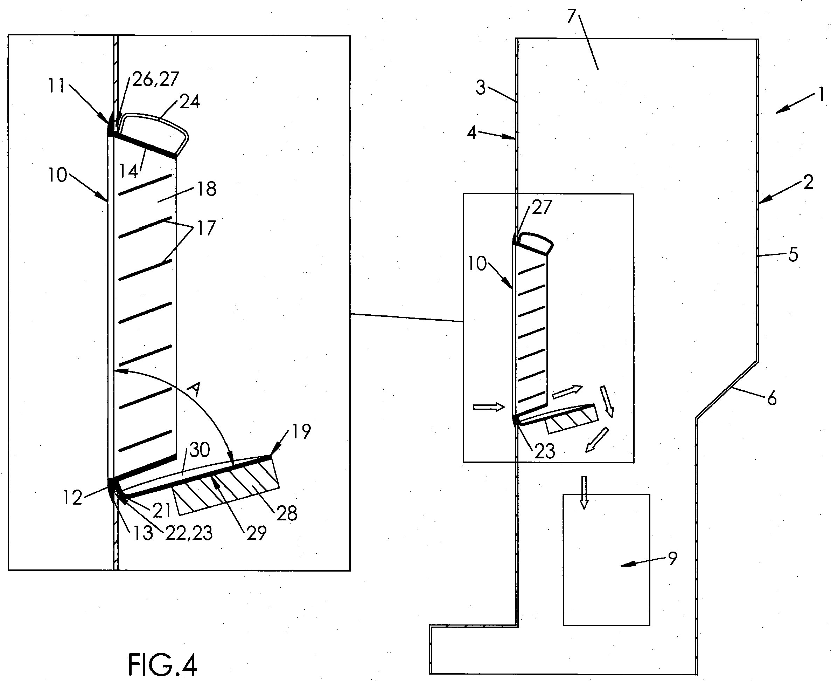

Comme cela est bien visible sur les figures **3** et **4**, le déflecteur **19** présente, au voisinage de sa jonction avec le cadre **11**, un bord **21** avant replié sensiblement à l'équerre.

Ce repli forme une réserve **22** inférieure d'emboîtement pour un bord **23** inférieur de l'ouverture **8**, de sorte à permettre l'emboîtement de la grille **10** dans celle-ci.

Afin de permettre le montage amovible de la grille **10** dans l'ouverture **8**, la grille **10** comprend, à l'opposé du déflecteur **19**, au moins un (et par exemple deux) organe(s) **24** élastique(s) de retenue de la grille dans l'ouverture. Selon un mode préféré de réalisation illustré notamment sur les figures 2 à 4, cet organe **24** élastique se présente sous forme d'un anneau déformable qui s'étend en saillie à partir d'un bord **25** supérieur de la bouche **14**.

Comme on le voit sur la figure **4**, chaque anneau **24** est écarté de la face **13** arrière de la lèvre **12** de sorte à former une réserve **26** supérieure d'emboîtement pour un bord **27** supérieur de l'ouverture **8**, de sorte à permettre l'emboîtement de la grille **10** dans celle-ci.

La grille **10** comporte en outre un tampon **28** acoustique, fixé (par exemple par collage) sur une face **29** inférieure du déflecteur **19**, tournée à l'opposé du cadre **11**. Ce tampon **28**, réalisé dans un matériau poreux et de préférence élastique tel qu'une mousse ou un élastomère, a pour fonction d'absorber les sons en provenance de l'extérieur du véhicule et d'éviter leur propagation vers l'intérieur du véhicule via la grille **10**.

On a partiellement illustré par des flèches sur la figure 4 le flux d'air extrait du véhicule au travers de la grille **10**. On voit que l'air est dévié successivement par les lamelles **17** puis par le déflecteur **19**. L'air contourne le déflecteur **19** puis est dirigé vers l'ouverture **9** aval où il est évacué du véhicule.

On comprend que les sons (notamment de roulage) remontant de l'extérieur du véhicule par l'ouverture **9** aval sont amortis par le tampon **28** acoustique. Le déflecteur **19** muni du tampon **28** forme obstacle à la propagation des sons au travers de la grille **10** et, conformé en chicane, agit ainsi à la manière d'un clapet anti-retour.

Comme cela est illustré sur les figures 3 et 4, le déflecteur **19** peut être muni, par exemple sur une face supérieure, de nervures **30** de rigidification.

Ces nervures **30** confèrent au déflecteur **19** une rigidité en flexion permettant de minimiser les phénomènes de fatigue accompagnant d'éventuels battements du déflecteur **19** en raison des variations de pression de part et d'autre de celui-ci.

Il résulte de l'architecture qui vient d'être décrite les avantages suivants.

Premièrement, compte tenu de la réalisation monobloc de la grille **10**, qui intègre le déflecteur **19** et le tampon **28** acoustique, la fabrication et le montage du système 1 d'aération sont simplifiés.

Deuxièmement, le déflecteur **19** et le tampon **28** étant disposés au plus près de la bouche **14**, les fonctions de déflexion et d'insonorisation sont réalisées de manière plus efficace.

## Revendications

1. Grille (**10**) pour un système (**1**) d'aération de véhicule automobile, cette grille (**10**) comprenant un cadre (**11**) et une série de lamelles (**17**) qui s'étendent en travers du cadre (**11**), **caractérisée en ce qu'**elle comprend en outre un déflecteur (**19**) intégré, qui s'étend en porte-à-faux à partir d'un bord du cadre (**11**), et un tampon (**28**) acoustique fixé sur une face (**29**) du déflecteur (**19**) tournée à l'opposé du cadre (**11**).

2. Grille (**10**) selon la revendication 1, **caractérisée en ce que** le déflecteur (**19**) se présente sous forme d'une languette sensiblement plate.

3. Grille (**10**) selon la revendication 1 ou la revendication 2, **caractérisée en ce que** le déflecteur (**19**) présente, au voisinage d'un raccord avec le cadre (**11**), un repli (**21**) formant une réserve (**22**) d'emboîtement pour un bord (**23**) d'une ouverture (**8**) formée dans une paroi (**3**) de montage de la grille (**10**).

4. Grille (**10**) selon la revendication 3, **caractérisée en ce qu'**elle comprend, à l'opposé du déflecteur (**19**), au moins un organe (**24**) élastique de retenue de la grille (**10**) dans l'ouverture (**8**).

5. Grille (**10**) selon l'une des revendications précédentes, **caractérisée en ce que** le déflecteur (**19**) forme, avec une face (**13**) d'appui du cadre (**11**), un angle inférieur à 90°.

6. Grille (**10**) selon la revendication 5, **caractérisée en ce que** l'angle est compris entre 60 et 80°.

7. Grille (**10**) selon l'une des revendications précédentes, **caractérisée en ce que** le tampon (**28**) acoustique est réalisé dans un matériau poreux tel qu'une mousse.

8. Grille (**10**) selon l'une des revendications précédentes, **caractérisée en ce que** le cadre (**11**) comprend une lèvre (**12**) périphérique et une bouche (**14**) sensiblement conique qui s'étend à partir de la lèvre (**12**), dans lequel s'étendent les lamelles (**17**).

9. Système (**1**) d'aération pour un véhicule automobile, qui comprend un caisson (**2**) formant un conduit d'aération, muni d'une paroi (**3**) frontale dans laquelle est percée une ouverture (**8**), et une grille (**10**) selon l'une des revendications précédentes, montée dans l'ouverture (**8**).

10. Véhicule automobile équipé d'un système (**1**) d'aération selon la revendication 9.

## Patentansprüche

1. Gitter (10) für ein Lüftungssystem (1) eines Kraftfahrzeugs, wobei dieses Gitter (10) einen Rahmen (11) und eine Reihe von Lamellen (17), die sich quer zum Rahmen (11) erstrecken, umfasst, **dadurch gekennzeichnet, dass** es ferner einen integrierten Deflektor (19), der sich vorgekragt ab einem Rand des Rahmens (11) erstreckt, und einen Akustikpuffer (28), der an einer Fläche (29) des Deflektors (19) befestigt ist, die in eine andere Richtung als der Rahmen (11) zeigt, umfasst.

2. Gitter (10) nach Anspruch 1, **dadurch gekennzeichnet, dass** der Deflektor (19) die Form einer etwa flachen Zunge hat.

3. Gitter (10) nach Anspruch 1 oder Anspruch 2, **dadurch gekennzeichnet, dass** der Deflektor (19) in der Nähe einer Verbindung mit dem Rahmen (11) einen Knick (21) aufweist, der eine Rastreserve (22) für einen Rand (23) einer in einer Montagewand (3) des Gitters (10) eingearbeiteten Öffnung (8) bildet.

4. Gitter (10) nach Anspruch 3, **dadurch gekennzeichnet, dass** es gegenüber dem Deflektor (19) mindestens ein elastisches Halteorgan (24) des Gitters (10) in der Öffnung (8) umfasst.

5. Gitter (10) nach einem der vorangehenden Ansprüche, **dadurch gekennzeichnet, dass** der Deflektor (19) mit einer Stützfläche (13) des Rahmens (11) einen Winkel unter 90° bildet.

6. Gitter (10) nach Anspruch 5, **dadurch gekennzeichnet, dass** der Winkel zwischen 60° und 80° inklusive ist.

7. Gitter (10) nach einem der vorangehenden Ansprüche, **dadurch gekennzeichnet, dass** der Akustikpuffer (28) aus einem porösen Material wie ein Schaum hergestellt ist.

8. Gitter (10) nach einem der vorangehenden Ansprüche, **dadurch gekennzeichnet, dass** der Rahmen (11) eine Umfangslippe (12) und eine etwa konische, sich ab der Lippe (12) erstreckende Mündung (14) umfasst, in welcher sich die Lamellen (17) erstrecken.

9. Lüftungssystem (1) für ein Kraftfahrzeug, das einen Kasten (2) umfasst, der eine Lüftungsleitung bildet, ausgestattet mit einer Frontwand (3), in der eine Öffnung (8) eingearbeitet ist, und einem Gitter (10) nach einem der vorangehenden Ansprüche, das in der Öffnung (8) montiert ist.

10. Kraftfahrzeug, das mit einem Lüftungssystem (1) nach Anspruch 9 ausgestattet ist.

## Claims

1. Grating (10) for a motor vehicle ventilation system (1) this grating (10) comprising a surround (11) and a series of slats (17) which extend across the surround (11), **characterised in that** it further comprises an in-built deflector (19), which cantilevers out from one edge of the surround (11), and an acoustic buffer (28) fixed to a turned face (29) of the deflector (19) opposite the surround (11).

2. Grating (10) according to claim 1, **characterised in that** the deflector (19) is in the form of a substantially flat tab.

3. Grating (10) according to claim 1 or claim 2, **characterised in that** the deflector (19) has, near a connection with the surround (11), a turned edge (21) forming an interlocking reserve (22) for an edge (23) of an opening (8) formed in an assembly wall (3) of the grating (10).

4. Grating (10) according to claim 3, **characterised in that** it comprises, opposite the deflector (19), at least one elastic holding member (24) for holding the grating (10) in the opening (8).

5. Grating (10) according to one of the previous claims, **characterised in that** the deflector (19) forms, with a supporting face (13) supporting the surround (11), an angle of less than 90°.

6. Grating (10) according to claim 5, **characterised in that** the angle is between 60° and 80°.

7. Grating (10) according to one of the previous claims, **characterised in that** the acoustic buffer (28) is made from a porous material such as a foam.

8. Grating (10) according to one of the previous claims, **characterised in that** the surround (11) comprises a peripheral lip (12) and a substantially tapered mouth (14) which extends from the lip (12), wherein the slats extend (17).

9. Motor vehicle ventilation system (1), comprising a casing (2) forming a ventilation duct, equipped with a frontal wall (3) wherein an opening (8) is bored, and a grating (10) according to one of the previous claims, mounted in the opening (8).

10. Motor vehicle equipped with a ventilation system (1) according to claim 9.
